# EUROPÄISCHE PATENTSCHRIFT

(11) **EP 3 827 452 B1**
(45) Veröffentlichungstag und Bekanntmachung des Hinweises auf die Patenterteilung: **23.08.2023**
(21) Anmeldenummer: 19769030.8
(22) Anmeldetag: 27.08.2019
(51) Int. Cl.: H01H 3/26, H02P 6/08, H02P 7/29

(54) **MOTORVORRICHTUNG FÜR EINEN SCHALTERANTRIEB EINES ELEKTRISCHEN SCHALTERS UND VERFAHREN ZU DESSEN BETRIEB**
MOTOR APPARATUS FOR A SWITCH DRIVE OF AN ELECTRIC SWITCH AND METHOD FOR OPERATION THEREOF
SYSTÈME DE MOTEUR POUR UNITÉ D'ACTIONNEMENT D'UN INTERRUPTEUR ÉLECTRIQUE ET PROCÉDÉ PERMETTANT DE FAIRE FONCTIONNER LEDIT SYSTÈME

(30) Priorität: 17.09.2018 DE 102018215756
(43) Veröffentlichungstag der Anmeldung: 02.06.2021
(73) Patentinhaber: Siemens Energy Global GmbH & Co. KG, 81739 München (DE)
(72) Erfinder: BRUMMUND, David, 12053 Berlin (DE); HILKER, Thomas, 14532 Stahnsdorf (DE)
(86) Internationale Anmeldenummer: PCT/EP2019/072841
(87) Internationale Veröffentlichungsnummer: WO 2020/057914

(56) Entgegenhaltungen:
- WO-A1-2012/020285
- WO-A2-2009/027477
- DE-A1-102016 218 334

## Beschreibung

Die Erfindung betrifft eine Motorvorrichtung für einen Schalterantrieb eines elektrischen Schalters und ein Verfahren zum Betrieb einer derartigen Motorvorrichtung.

Elektrische Schalter zum Schließen oder Öffnen von Strompfaden mittlerer und hoher elektrischer Spannungen und Ströme benötigen zum Bewegen von Schaltkontakten der Schalter große mechanische Energie.

Beispielsweise werden zum Bewegen der Schaltkontakte von Leistungsschaltern oft Schalterantriebe verwendet, die mechanische Energie speichern, beispielsweise Federspeicherantriebe. In einem Federspeicherantrieb wird eine Feder, beispielsweise eine Schraubenfeder, oft mit einem Motor über ein Getriebe gespannt. Die Feder wird gegen ein selbständiges Entspannen verriegelt, so dass die Energie in der Feder gespeichert bleibt. Durch eine Auslösevorrichtung kann die gespeicherte Energie freigegeben werden, indem die Verriegelung der Feder gelöst wird, so dass sich die Feder entspannt. Mit der verfügbaren gespeicherten Energie kann somit eine Schalthandlung ausgeführt werden.

Anders als Leistungsschalter bewirken Trennschalter eine definierte Unterbrechung annähernd lastfreier elektrischer Stromkreise, indem Schaltkontakte direkt, beispielsweise von einem Motor, angetrieben werden. Auf eine Speicherung von Energie wird dabei verzichtet, da eine lastfreie (leistungslose) Trennung der Schaltkontakte langsamer erfolgen kann.

Die elektrischen Versorgungsspannungen von Elektromotoren für Schalterantriebe elektrischer Schalter sind durch normative Vorgaben und Anwendungsanforderungen vielfältig und unterscheiden sich neben der Spannungshöhe auch in der Spannungsform, die beispielsweise eine ein- oder dreiphasige Wechselspannung oder eine Gleichspannung sein kann. Daher werden für Schalterantriebe elektrischer Schalter unterschiedliche Motortypen und -ausführungen eingesetzt. Ansteuerungs- , Absicherungs-, Verriegelungs- und Überwachungsfunktionen für die Motoren werden durch eine Vielzahl von Bauteil- und Verdrahtungsvarianten realisiert. Die Bauteil- und Verdrahtungsvarianz erhöht die Kosten und die Fehlerrate der Installation der Motoren.

Die Druckschrift DE 10 2016 218 334 A1 zeigt eine Motorvorrichtung für einen Schalterantrieb eines zuvor beschriebenen elektrischen Schalters. Die Motorvorrichtung umfasst einen bürstenlosen Elektromotor und eine elektronische Steuerungsvorrichtung zur Steuerung des Elektromotors, die Steuerungsvorrichtung umfasst ihrerseits: (i) eine Gleichrichtereinheit zum Gleichrichten einer Versorgungsspannung der Motorvorrichtung, wenn die Versorgungsspannung eine Wechselspannung ist, und zum Verpolungsschutz, wenn die Versorgungsspannung eine Gleichspannung ist, (ii) eine Spannungsmesseinheit zur Erfassung einer Gleichrichter-Ausgangsspannung der Gleichrichtereinheit, (iii) eine Schalteinheit zur Erzeugung einer pulsweiten-modulierten Antriebswechselspannung für den Elektromotor direkt aus der Versorgungsspannung oder der Gleichrichter-Ausgangsspannung der Gleichrichtereinheit und (iv) eine Steuereinheit zur Ansteuerung der Schalteinheit in Abhängigkeit von der erfassten Versorgungs- oder Gleichrichter-Ausgangsspannung. Aus der WO 2009/027477 A2 und der DE 10 2016 218334 A1 sind ebenfalls Motorvorrichtungen für Schalterantriebe bekannt.

Der Erfindung liegt die Aufgabe zugrunde, eine Motorvorrichtung für einen Schalterantrieb eines elektrischen Schalters und ein entsprechendes Betriebsverfahren anzugeben, bei denen die Motorvorrichtung mit verschiedenen Versorgungsspannungs- und Motorspannungsniveaus betreibbar und einfach und günstig herstellbar ist.

Die Aufgabe wird erfindungsgemäß durch die Merkmale des Ansprüche 1 und 10 gelöst.

Vorteilhafte Ausgestaltungen der Erfindung sind Gegenstand der Unteransprüche.

Eine erfindungsgemäße Motorvorrichtung für einen Schalterantrieb eines elektrischen Schalters umfasst einen Elektromotor und eine Steuerungsvorrichtung zur Steuerung des Elektromotors, wobei die Steuerungsvorrichtung ihrerseits die folgenden Komponenten aufweist: (i) eine Gleichrichtereinheit zum Gleichrichten einer Versorgungsspannung der Motorvorrichtung, wenn die Versorgungsspannung eine Wechselspannung ist, und zum Verpolungsschutz, wenn die Versorgungsspannung eine Gleichspannung ist, (ii) eine Spannungsmesseinheit zur Erfassung der Versorgungsspannung oder einer Gleichrichter-Ausgangsspannung der Gleichrichtereinheit, (iii) eine Schalteinheit zur Erzeugung einer Antriebsspannung für den Elektromotor aus der Versorgungsspannung oder aus der Gleichrichter-Ausgangsspannung der Gleichrichtereinheit und (iv) eine Steuereinheit zur Ansteuerung der Schalteinheit in Abhängigkeit von der erfassten Versorgungs- oder Gleichrichter-Ausgangsspannung. Es ist vorgesehen, dass der Elektromotor ein mit Gleichstrom betreibbarer Elektromotor ist und die Schalteinheit eine Schalteinheit zur Erzeugung einer Antriebsgleichspannung für diesen mit Gleichstrom betreibbaren Elektromotor ist. Die Antriebsgleichspannung kann als kontinuierliche Gleichspannung oder modulierte Gleichspannung ausgebildet sein. Durch die Nutzung eines mit Gleichstrom betreibbaren Elektromotors bzw. einer entsprechenden Antriebsgleichspannung als Antriebsspannung kann bei gleicher Funktionalität zumindest die Schalteinheit zur Erzeugung der Antriebsspannung deutlich einfacher aufgebaut und damit auch preisgünstiger sein als die aus dem Stand der Technik bekannten Schalteinheiten.

Eine solche Motorvorrichtung kann vorteilhaft mit verschiedenen Versorgungsspannungen betrieben werden, wobei sich die Versorgungsspannungen hinsichtlich ihrer Amplitude und/oder Spannungsform unterscheiden können. Die Gleichrichtereinheit ermöglicht den wahlweisen Betrieb mit einer ein- oder mehrphasigen Versorgungswechselspannung und einer beliebig gepolten Versorgungsgleichspannung, indem sie eine Versorgungswechselspannung gleichrichtet und einen Verpolungsschutz für eine Versorgungsgleichspannung bereitstellt. Die Erzeugung einer Antriebsgleichspannung für den Elektromotor aus der vorgegebenen Versorgungsspannung ermöglicht, die Antriebsgleichspannung für den Elektromotor an die jeweilige Versorgungsspannung und an die Anforderungen der anzutreibenden Bauteile anzupassen. Dadurch wird eine weitgehende Unabhängigkeit der Motorvorrichtung von der Amplitude und Form der Versorgungsspannung und den anzutreibenden Bauteilen erreicht, sodass die Motorvorrichtung für Schalterantriebe verschiedener elektrischer Schalter eingesetzt werden kann, beispielsweise zum Spannen von Federn der Federspeicherantriebe von Leistungsschaltern oder zum direkten Antrieb von Schaltkontakten von Trennschaltern. Insbesondere kann die Anzahl von Motorvarianten für verschiedene Schalter vorteilhaft reduziert werden. Statt unterschiedlicher Elektromotoren wird für verschiedene Schalter ein mit Gleichstrom betreibbarer Elektromotor eingesetzt. Die Erfindung reduziert zudem vorteilhaft den Änderungsaufwand bei einer nachträglichen Anpassung der Versorgungsspannung. Fertigungstechnisch entfallen insbesondere die Montage und Verdrahtung unterschiedlicher elektrischer Komponenten zur Überwachung und Steuerung des Elektromotors. Durch die damit einhergehende Vereinheitlichung wird auch eine Fehlerwahrscheinlichkeit während dieser Fertigungsprozesse reduziert.

Gemäß einer bevorzugten Ausführungsform der Erfindung ist der mit Gleichstrom betreibbare Elektromotor ein ausschließlich mit Gleichstrom betreibbarer Gleichstrommotor oder ein Reihenschlussmotor. Der Reihenschlussmotor ist auch unter der Bezeichnung Universalmotor bekannt und kann sowohl mit Gleichstrom als auch mit Wechselstrom betrieben werden. Gemäß der Erfindung ist die Schalteinheit als vereinfachter Abwärtswandler ausgebildet oder umfasst einen vereinfachten Abwärtswandler. Der Abwärtswandler, auch Tiefsetzsteller, Abwärtsregler, englisch step-down converter oder buck converter, ist eine relativ einfache Form eines schaltenden Gleichspannungswandlers. Die Ausgangsspannung des Abwärtswandlers ist stets kleiner als der Betrag der Eingangsspannung des Abwärtswandlers.

Gemäß noch einer weiteren bevorzugten Ausführungsform der Erfindung ist die Schalteinheit der Gleichrichtereinheit nachgeschaltet oder weist die Gleichrichtereinheit die Schalteinheit auf. Im ersten Fall sind Gleichrichtereinheit und Schalteinheit getrennt und es ergibt sich eine Art Zwischenkreis zwischen den beiden Einheiten. Die Spannungsmesseinheit erfasst in diesem Fall die Gleichrichter-Ausgangsspannung der Gleichrichtereinheit. Im zweiten Fall werden Gleichricht- und Schaltfunktion in einer Einheit, der Gleichrichtereinheit, ausgeführt. Dementsprechend erfasst die Spannungsmesseinheit in diesem Fall die Versorgungsspannung.

Eine Ausgestaltung der Erfindung sieht vor, dass die Steuerungsvorrichtung eine Strommesseinheit zur Erfassung eines zwischen der Schalteinheit und dem mit Gleichstrom betreibbaren Elektromotor fließenden Motorstroms aufweist. Diese Ausgestaltung der Erfindung ermöglicht vorteilhaft eine Überwachung des Motorstroms, um Überlastungen und Fehlfunktionen des Elektromotors zu erkennen.

Eine weitere Ausgestaltung der Erfindung sieht vor, dass die Steuerungsvorrichtung eine galvanische Trenneinheit zur galvanischen Trennung des mit Gleichstrom betreibbaren Elektromotors von der Steuerungsvorrichtung aufweist. Beispielsweise weist die galvanische Trenneinheit ein Relais oder ein Schütz zur galvanischen Trennung des Elektromotors von der Steuerungsvorrichtung auf. Diese Ausgestaltung der Erfindung ermöglicht vorteilhaft, den Elektromotor im Falle einer erkannten Überlastung oder Fehlfunktion sicher auszuschalten.

Eine weitere Ausgestaltung der Erfindung sieht vor, dass die Steuereinheit eine Eingangsbaugruppe aufweist, über die der Steuereinheit Eingangssignale wenigstens eines externen Gerätes zuführbar sind oder zugeführt werden. Insbesondere werden der Steuereinheit über die Eingangsbaugruppe Eingangssignale eines Endlagenschalters zur Erfassung einer Endstellung des Schalterantriebs zugeführt. Diese Ausgestaltung der Erfindung ermöglicht vorteilhaft, mit der Steuereinheit für den Betrieb des jeweiligen Schalters relevante Eingangssignale zu verarbeiten. Beispielsweise kann die Steuerungsvorrichtung dadurch auf Eingangssignale wie Verriegelungsanforderungen zum Verriegeln des Schalterantriebs reagieren und den Elektromotor erforderlichenfalls abschalten. Eingangssignale eines Endlagenschalters zur Erfassung einer Endstellung des Schalterantriebs zur Schalteinheit ermöglichen insbesondere, mit der Steuereinheit eine Endstellung des Schalterantriebs zu überwachen.

Eine weitere Ausgestaltung der Erfindung sieht vor, dass die Steuereinheit eine Ausgangsbaugruppe aufweist, über die von der Steuereinheit Ausgangssignale an wenigstens ein externes Gerät abgegeben werden. Diese Ausgestaltung der Erfindung ermöglicht vorteilhaft, mit den Ausgangssignalen einen Zustand des Elektromotors und/oder der Steuerungsvorrichtung auszugeben und in anderen Baugruppen, beispielsweise in konventionellen elektrischen Steuerungsbauteilen, weiter zu verarbeiten.

Bei dem erfindungsgemäßen Verfahren zum Betrieb einer vorstehend genannten Motorvorrichtung ist vorgesehen, dass
- mittels der Gleichrichtereinheit eine Versorgungsspannung der Motorvorrichtung gleichgerichtet wird, wenn die Versorgungsspannung eine Wechselspannung ist, und ein Verpolungsschutz bereitgestellt wird, wenn die Versorgungsspannung eine Gleichspannung ist,
- mittels der Spannungsmesseinheit die Versorgungsspannung (U0) der Motorvorrichtung oder die Ausgangsspannung der Gleichrichtereinheit erfasst wird und
- mittels der Schalteinheit eine Antriebsspannung für den mit Gleichstrom betreibbaren Elektromotor erzeugt wird, wobei die Schalteinheit mittels der Steuereinheit in Abhängigkeit von der mittels der Spannungsmesseinheit erfassten Versorgungs- oder Gleichrichter-Ausgangsspannung angesteuert wird. Die Vorteile des erfindungsgemäßen Verfahrens ergeben sich entsprechend der oben bereits genannten Vorteile der erfindungsgemäßen Motorvorrichtung.

Eine Ausgestaltung des Verfahrens sieht vor, dass mittels der Steuereinheit eine Pulsweiten-modulierte Antriebsgleichspannung für den mit Gleichstrom betreibbaren Elektromotor erzeugt werden.

Eine weitere Ausgestaltung des Verfahrens sieht vor, dass eine Amplitude eines zwischen der Schalteinheit und dem mit Gleichstrom betreibbaren Elektromotor fließenden Motorstroms erfasst wird, ein Amplitudenschwellenwert vorgegeben wird und der mit Gleichstrom betreibbare Elektromotor ausgeschaltet wird, wenn die erfasste Amplitude des Motorstroms den Amplitudenschwellenwert überschreitet. Dadurch kann vorteilhaft das Fließen eines zu hohen Motorstroms verhindert werden.

Noch eine weitere Ausgestaltung des Verfahrens sieht vor, dass eine Zeitdauer erfasst wird, während der ein Motorstrom zwischen der Schalteinheit und dem mit Gleichstrom betreibbaren Elektromotor fließt, ein Zeitschwellenwert vorgegeben wird und der mit Gleichstrom betreibbare Elektromotor ausgeschaltet wird, wenn die erfasste Zeitdauer den Zeitschwellenwert überschreitet. Dadurch kann vorteilhaft das Fließen des Motorstroms während einer zu langen Zeitdauer verhindert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- Fig. 1: ein Blockdiagramm eines Schalterantriebs eines elektrischen Schalters und einer Motorvorrichtung gemäß einer ersten Ausführungsform der Erfindung,
- Fig. 2: ein Blockdiagramm eines Schalterantriebs eines elektrischen Schalters und einer Motorvorrichtung gemäß einer zweiten Ausführungsform der Erfindung,
- Fig. 3: zwei Diagramme mit in der Motorvorrichtung auftretenden Spannungen,
- Fig. 4: der Betriebsprozess, wie er in der Motorvorrichtung der Fig. 1 abläuft,
- Fig. 5: der Betriebsprozess, wie er in der Motorvorrichtung der Fig. 2 abläuft, und
- Fig. 6: ein schematischer Schaltplan der in Fig. 1 gezeigten Motorvorrichtung.

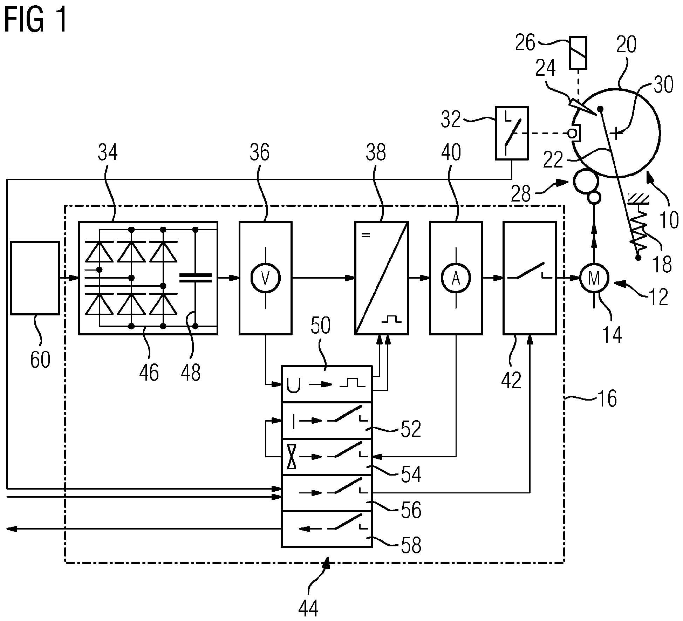

Fig. 1 zeigt ein Blockdiagramm eines Schalterantriebs 10 eines elektrischen Schalters und einer Motorvorrichtung 12 für diesen Schalterantrieb 10. Die Motorvorrichtung 12 weist einen mit Gleichstrom betreibbaren Elektromotor 14 und eine elektronische Steuerungsvorrichtung 16 zur Steuerung dieses Elektromotors 14 auf. Der Schalterantrieb 10 ist im gezeigten Beispiel ein Federspeicherantrieb und weist eine Feder 18, ein Spannrad 20, ein die Feder 18 mit dem Spannrad 20 verbindendes Kopplungselement 22, eine Verriegelungseinheit 24 und eine Auslöseeinheit 26 auf. Der mit Gleichstrom betreibbare Elektromotor 14 kann ein Universal-, Reihenschluss- , Nebenschluss- oder permanentmagneterregter Gleichstrommotor sein. Im Folgenden wird er der Einfachheit halber kurz als Elektromotor 14 bezeichnet.

Der Elektromotor 14 ist durch ein Getriebe 28 an das Spannrad 20 gekoppelt, um das Spannrad 20 um eine Drehachse 30 in einer ersten Drehrichtung aus einer ersten Endstellung in eine zweite Endstellung zu drehen. Das Kopplungselement 22 ist als ein Kopplungsstab ausgeführt, der an einem Ende mit dem Spannrad 20 und an dem anderen Ende mit der Feder 18 verbunden ist, sodass die Feder 18 durch eine Drehung des Spannrades 20 um die Drehachse 30 in der ersten Drehrichtung gespannt wird.

Somit kann die Feder 18 durch den Elektromotor 14 gespannt werden. Durch die Verriegelungseinheit 24 kann das Spannrad 20 verriegelt werden, sodass eine Drehung des Spannrades 20 blockiert wird, um ein Entspannen der Feder 18 zu verhindern. Beispielsweise weist die Verriegelungseinheit 24 dazu einen Verriegelungsanker auf, der das Spannrad 20 und/oder das Kopplungselement 22 in der zweiten Endstellung, in der die Feder 18 gespannt ist, arretiert.

Durch die Auslöseeinheit 26 kann die Verriegelung des Spannrades 20 aufgehoben werden, um ein Entspannen der Feder 18 freizugeben. Durch das Entspannen der Feder 18 wird das Spannrad 20 aus der zweiten Endstellung in die erste Endstellung gedreht und ein (nicht dargestellter) Schaltkontakt des Schalters bewegt, um einen Strompfad zu unterbrechen. Durch einen Endlagenschalter 32 werden die Endstellungen des Spannrades 20 erfasst.

Die Steuerungsvorrichtung 16 weist eine Gleichrichtereinheit 34, eine Spannungsmesseinheit 36, eine Schalteinheit 38, eine Strommesseinheit 40, eine galvanische Trenneinheit 42 und eine Steuereinheit 44 auf. Die Gleichrichtereinheit 34 umfasst eine Gleichrichterschaltung 46 und einen der Gleichrichterschaltung 46 nachgeschalteten Kondensator 48 auf, der als Zwischenkreiskondensator aufgefasst werden kann und den Eingang eines entsprechenden Zwischenkreises bildet, in dem die Spannungsmesseinheit 36 verschaltet ist. Die Steuereinheit 44 weist eine Pulsweitenmodulationseinheit 50, eine Abschalteinheit 52, eine Zeit- und Stromüberwachungseinheit 54, eine Eingangsbaugruppe 56 und eine Ausgangsbaugruppe 58 auf. Ein Mikrocontroller bildet bevorzugt die Steuereinheit 44.

Die Gleichrichtereinheit 34 ist mit einer Versorgungsspannungsquelle 60 verbunden, von der die Motorvorrichtung 12 mit einer Versorgungsspannung U0 versorgt wird. Die Versorgungsspannungsquelle 60 ist eine ein- oder mehrphasige Wechselspannungsquelle oder eine Gleichspannungsquelle.

Mittels der Gleichrichtereinheit 34 wird die Versorgungsspannung U0 gleichgerichtet, wenn die Versorgungsspannung U0 eine Wechselspannung ist, und ein Verpolungsschutz bereitgestellt, wenn die Versorgungsspannung U0 eine Gleichspannung ist, sodass von der Gleichrichtereinheit 34 eine Gleichrichter-Ausgangsspannung Ui ausgegeben wird, die eine Gleichspannung mit einer vorgegebenen Polarität ist. Eine von der vorgegebenen Polarität abweichende Polarität einer Versorgungsspannung U0, die eine Gleichspannung ist, oder eines Anteils einer Versorgungsspannung U0, die eine Wechselspannung ist, wird von der Gleichrichtereinheit 34 in die vorgegebene Polarität umgewandelt.

Mittels der Spannungsmesseinheit 36 wird eine Amplitude der Gleichrichter-Ausgangsspannung Ui erfasst. Die Spannungsmesseinheit 36 ist eine elektrische oder elektronische Schaltung zur Spanungsermittlung und weist beispielsweise einen Spannungsteiler auf. In diesem Ausführungsbeispiel ist sie so verschaltet, dass sie die Amplitude der Gleichrichter-Ausgangsspannung (Zwischenkreisspannung) Ui ermittelt.

Mittels der Schalteinheit 38 wird aus der Gleichrichter-Ausgangsspannung Ui eine pulsweitenmodulierte Antriebsspannung Uou für den Elektromotor 14 erzeugt. Dazu wird die Schalteinheit 38 mittels der Steuereinheit 44 in Abhängigkeit von der mit der Spannungsmesseinheit 36 erfassten Amplitude der Gleichrichter-Ausgangsspannung Ui angesteuert.

Mittels der Strommesseinheit 40 wird ein zwischen der Schalteinheit 38 und dem Elektromotor 14 fließender Motorstrom erfasst. Die Strommesseinheit 40 weist beispielsweise eine Wandlerspule oder einen Shunt-Widerstand auf.

Mittels der galvanischen Trenneinheit 42 kann der Elektromotor 14 galvanisch von der Steuerungsvorrichtung 16 getrennt werden. Die Trenneinheit 42 weist beispielsweise ein Relais oder ein Schütz zur galvanischen Trennung von Elektromotor 14 und Steuerungsvorrichtung 16 auf.

Mittels der Pulsweitenmodulationseinheit 50 der Steuereinheit 44 werden in Abhängigkeit von der Gleichrichter-Ausgangsspannung Ui Pulsweitenmodulationssignale erzeugt, mit denen die Schalteinheit 38 angesteuert wird.

Mittels der Zeit- und Stromüberwachungseinheit 54 der Steuereinheit 44 wird der von der Strommesseinheit 40 erfasste Motorstrom ausgewertet. Dabei werden eine Amplitude des Motorstroms und eine Zeitdauer, während der der Motorstrom fließt, ermittelt.

Mittels der Abschalteinheit 52 der Steuereinheit 44 wird der Motorstrom über die Schalteinheit 38 abgeschaltet, wenn die Amplitude des Motorstroms einen vorgegebenen AmplitudenSchwellenwert überschreitet, oder wenn die Zeitdauer, während der der Motorstrom fließt, einen vorgegebenen Zeitschwellenwert überschreitet.

Über die Eingangsbaugruppe 56 der Steuereinheit 44 können der Steuereinheit 44 Eingangssignale von wenigstens einem (bezüglich der Steuerungsvorrichtung) externen Gerät zugeführt werden. Insbesondere können der Steuereinheit 44 über die Eingangsbaugruppe 56 Eingangssignale von dem Endlagenschalter 32 zugeführt werden. In Abhängigkeit von Eingangssignalen wird von der Eingangsbaugruppe 56 die Trenneinheit 42 aktiviert, um den Elektromotor 14 galvanisch von der Steuerungsvorrichtung 14 zu trennen.

Über die Ausgangsbaugruppe 58 können von der Steuereinheit 44 Ausgangssignale an wenigstens ein externes Gerät abgegeben werden. Mit einem Ausgangssignal wird beispielsweise ein Zustand des Elektromotors 14 und/oder ein Zustand der Steuerungsvorrichtung 16 und/oder ein Zustand des Schalterantriebs 10 übermittelt.

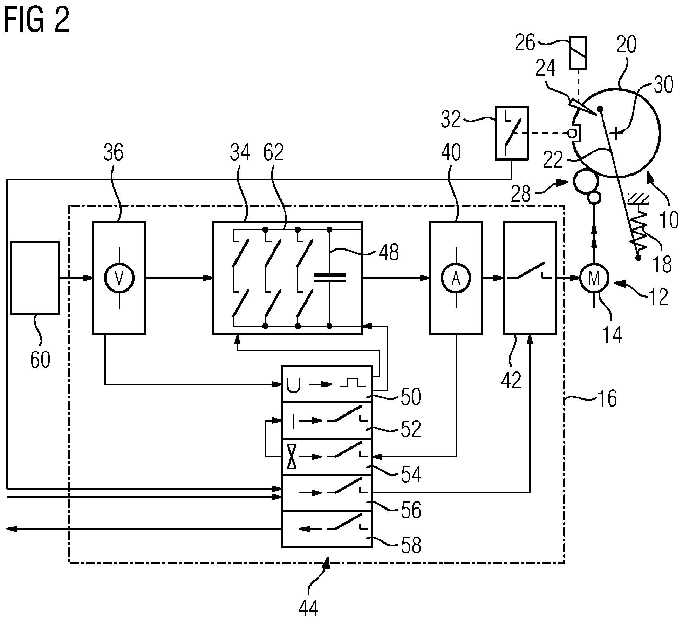

Fig. 2 zeigt ein Blockdiagramm des Schalterantriebs 10 für den elektrischen Schalter und eine Motorvorrichtung 12 für den Schalterantrieb 10 mit alternativ ausgestalteter Steuerungsvorrichtung 16. Mit anderen Worten ist also nur die Steuerungsvorrichtung 16 anders ausgestaltet als im Beispiel der Fig. 1. Da die beiden Ausgestaltungen der Steuerungsvorrichtungen 16 (der Figuren 1 und 2) jedoch sehr viele Gemeinsamkeiten aufweisen, soll hier nur auf die Unterschiede eingegangen werden.

Markantester Unterschied ist das Verhältnis von Gleichrichtereinheit 34 und Schalteinheit 38, 62. Während bei der in Fig. 1 gezeigten Steuerungsvorrichtung 16 die Schalteinheit 38 der Gleichrichtereinheit 34 nachgeschaltet ist, weist die Gleichrichtereinheit 34 der Fig. 2 die Schalteinheit 62 auf. Mit anderen Worten werden im Beispiel der Fig. 2 Gleichricht- und Schaltfunktion in einer Einheit, der Gleichrichtereinheit 34, ausgeführt, welche neben der Schalteinheit 62 auch den Kondensator 48 umfasst. Der Kondensator 48 dient als Glättungskondensator.

Da die Spannungsmesseinheit 36 eine zur Versorgungsspannung U0 proportionale Spannung messen soll, es aber keinen "Zwischenkreis" zwischen Gleichrichtereinheit 34 und Schalteinheit 62 gibt, ist die die Spannungsmesseinheit 36 nun so verschaltet, dass sie die Versorgungsspannung U0 selbst messen kann/misst.

Mittels der Pulsweitenmodulationseinheit 50 der Steuereinheit 44 werden nun in Abhängigkeit von der Versorgungsspannung U0 Pulsweitenmodulationssignale erzeugt, mit denen die Schalteinheit 62 angesteuert wird.

Mittels der Strommesseinheit 40 wird wieder der zwischen der Schalteinheit 62 und dem Elektromotor 14 fließende Motorstrom erfasst. Da in der Gleichrichtereinheit 34 der Kondensator 48 am Ausgang der Schalteinheit 62 verschaltet ist, erfolgt die Strommessung mittels der Strommesseinheit 40 hinter der Gleichrichtereinheit 34, also hinter dem Kondensator 48.

Eine der Aufgaben der elektronischen Steuerungsvorrichtung 16 besteht darin, eine Gleichspannung zu erzeugen, welche den gewünschten Arbeitspunkt des Elektromotors 16 einstellt. Diese Gleichspannung ist die Antriebsgleichspannung Uou.

Dazu wird die polrichtige und gegebenenfalls gleichgerichtete Versorgungsspannung U0 durch gesteuertes EIN- und AUS-Schalten der Schalteinheit 38, 62 so moduliert, dass eine pulsierende Rechteckspannung entsteht, deren relative Pulsbreite proportional zum notwendigen Gleichspannungsmittelwert ist.

Das rechtzeitige EIN- und AUS-Schalten der Elemente der Schalteinheit 38, 62 wird durch die Steuereinheit 44 gesteuert. Die Steuerung erfolgt dabei insbesondere über die Pulsweitenmodulationseinheit 50 dieser Steuereinheit 44. Eine weitere Aufgabe der elektronischen Steuerung besteht darin, die relative Breite der Spannungspulse an die Zwischenkreisspannung Ui anzupassen. Beim Anstieg der Zwischenkreisspannung Ui wird die relative Breite der Spannungspulse reduziert. Bei Verringerung der Zwischenkreisspannung Ui wird die relative Breite der Spannungspulse vergrößert. Auf diese Art wird die elektrische Leistung, die in den Elektromotor 14 eingebracht wird, auf die notwendige Leistung angepasst und auf die maximal zulässige Leistung beschränkt.

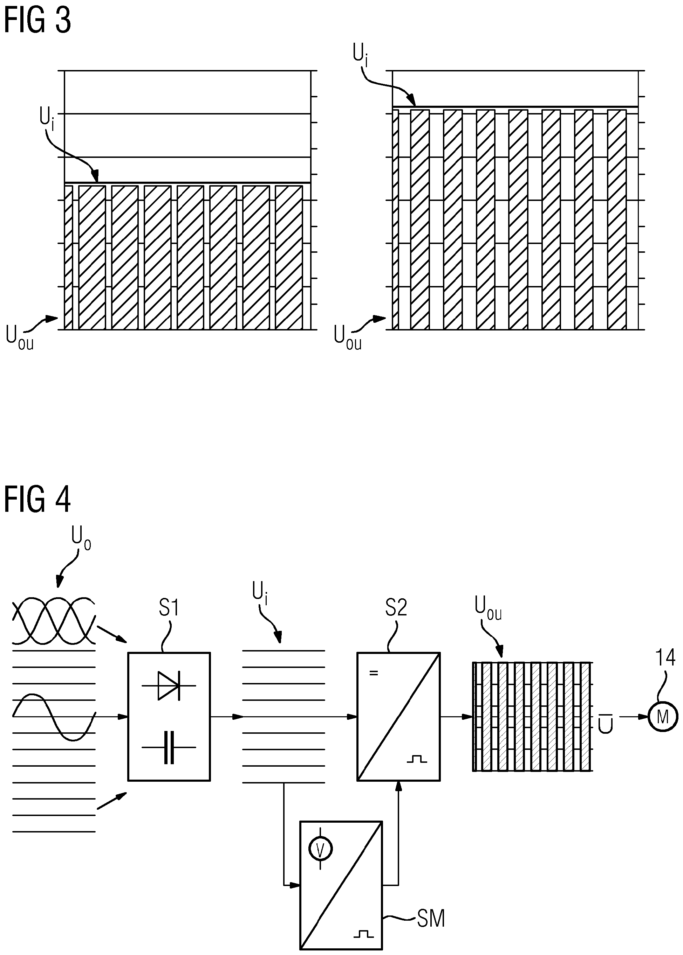

Auf der linken Seite von Fig. 3 ist eine Zwischenkreisspannung Ui mit pulsweitenmoduliertem Ausgangsspannung gezeigt, rechts eine deutlich größere Spannung und deren zugehörige pulsweiten-modulierte Ausgangsspannung mit kleinerem Tastgrad. Bei beiden Ausgangsspannungen ergibt sich der gleiche Mittelwert der Ausgangsspannung. Auf diese Weise kann also für unterschiedliche Versorgungsspannungen U0 oder für eine sich ändernde Versorgungsspannung U0 eine gleichwertige Antriebsspannung Uou für den Elektromotor 14 generiert werden.

Es ergibt sich in der Kombination aus elektronischer Steuerung und Elektromotor 14 der in Fig. 4 vereinfacht dargestellte Prozess, wie er in der Motorvorrichtung 12 der Fig. 1 abläuft.

Die Versorgungsspannung U0 eines definiert zulässigen Bereiches und quasi beliebiger Spannungsform speist den Eingang der elektronischen Steuerungsvorrichtung 16. Die Spannung U0 wird in Schritt S1 gleichgerichtet und in einem Messschritt SM vermessen. Anhand des Messergebnisses wird die Parametrisierung der Pulsweite vorgenommen und in ein Steuersignal umgewandelt. Das Steuersignal steuert eine Abwärtswandlung, die die gleichgerichtete Zwischenkreisspannung Ui zu einer pulsweitenmodulierten Gleichspannung mit einem Gleichspannungsmittelwert entsprechend dem Arbeitspunkt des Elektromotors 14 umformt (Schritt S2). Diese versorgt dann den Elektromotor 14.

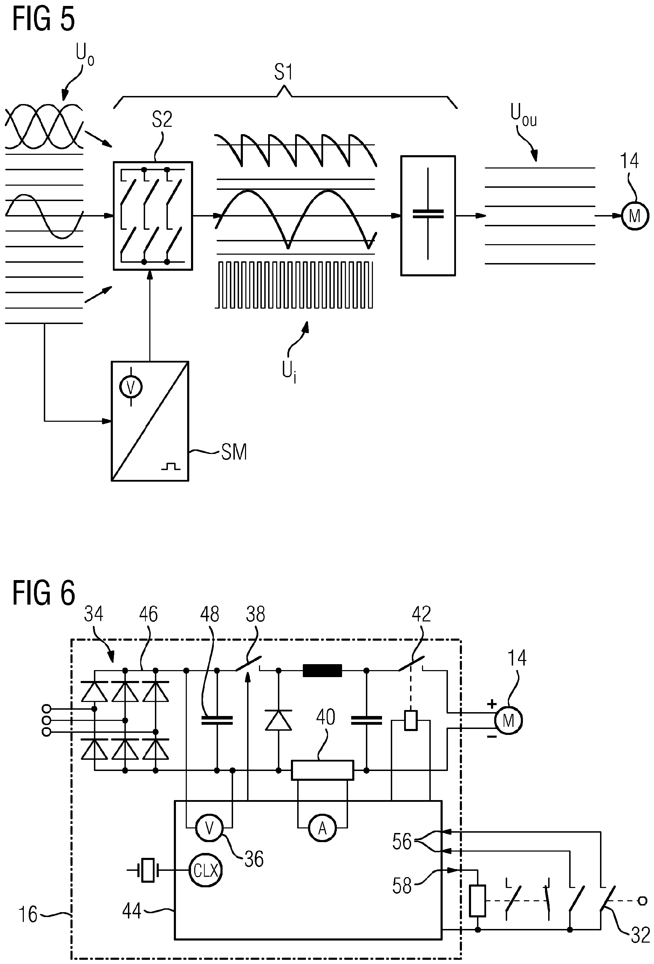

Alternativ ergibt sich der in Fig. 5 vereinfacht dargestellte Prozess, wie er in der Motorvorrichtung 12 der Fig. 2 abläuft. Dabei werden Höhe und Typ der Versorgungsspannung U0 in einem vorgelagerten Messschritt SM vor einer in Schritt S1 durchgeführten Gleichrichtung vermessen. In diesem Fall erfolgt eine gesteuerte Gleichrichtung von Wechselspannungen bzw. eine getaktete Einschaltung von Gleichspannungen. Somit wird die Spannungshöhe des Zwischenkreises an die Leistungsforderungen des Elektromotors 14 angepasst (Schritt S2) und mittels des Kondensators 48 geglättet.

Die Fig. 6 zeigt einen Schaltplan des in Fig. 1 gezeigten Ausführungsbeispiels der Motorvorrichtung 12, wobei einige der im Zusammenhang mit der Fig. 1 genannten Ausgestaltungen nun noch einmal explizit dargestellt sind. So ist die Schalteinheit 38 als Abwärtswandler und die galvanische Trenneinheit 42 als Relais dargestellt. Zwischen Abwärtswandler und galvanischer Trenneinheit 42 ist ein LC-Tiefpass zwischengeschaltet. Weiterhin ist nun auch die konkrete elektrische Verschaltung und Polarität des mit Gleichstrom betreibbaren Elektromotors 14 (Gleichstrommotor) angegeben und die Wandlerspule der Strommesseinheit 40 erkennbar. Die Versorgungsspannung U0 ist hier eine dreiphasige Versorgungsspannung U0. Die Gleichrichtereinheit 34 ist entsprechend eine Dreiphasen-Gleichrichtereinheit.

### Bezugszeichenliste:

- 10: Schalterantrieb
- 12: Motorvorrichtung
- 14: Elektromotor
- 16: Steuerungsvorrichtung
- 18: Feder
- 20: Spannrad
- 22: Kopplungselement
- 24: Verriegelungseinheit
- 26: Auslöseeinheit
- 28: Getriebe
- 30: Drehachse
- 32: Endlagenschalter
- 34: Gleichrichtereinheit
- 36: Spannungsmesseinheit
- 38: Schalteinheit
- 40: Strommesseinheit
- 42: galvanische Trenneinheit
- 44: Steuereinheit
- 46: Gleichrichterschaltung
- 48: Kondensator
- 50: Pulsweitenmodulationseinheit
- 52: Abschalteinheit
- 54: Zeit- und Stromüberwachung
- 56: Eingangsbaugruppe
- 58: Ausgangsbaugruppe
- 60: Versorgungsspannungsquelle
- 62: Schalteinheit
- U0: Versorgungsspannung
- Ui: Gleichrichter-Ausgangsspannung
- Uou: Antriebsspannung
- S1: Gleichrichtungsschritt
- S2: Spannungswandlungsschritt
- SM: Messschritt

## Patentansprüche

1. Motorvorrichtung (12) für einen Schalterantrieb (10) eines elektrischen Schalters, mit einem Elektromotor (14) und einer Steuerungsvorrichtung (16) zur Steuerung des Elektromotors (14), die Steuerungsvorrichtung (16) aufweisend:
- eine Gleichrichtereinheit (34) zum Gleichrichten einer Versorgungsspannung (U0) der Motorvorrichtung (12), wenn die Versorgungsspannung (U0) eine Wechselspannung ist, und zum Verpolungsschutz, wenn die Versorgungsspannung (U0) eine Gleichspannung ist,
- eine Spannungsmesseinheit (36) zur Erfassung der Versorgungsspannung (U0) oder einer Gleichrichter-Ausgangsspannung der Gleichrichtereinheit (34),
- eine Schalteinheit (38, 62) zur Erzeugung einer Antriebsspannung (Uou) für den Elektromotor (14) aus der Versorgungsspannung (U0) oder aus der Gleichrichter-Ausgangsspannung (Ui) und
- eine Steuereinheit (44) zur Ansteuerung der Schalteinheit (38, 62) in Abhängigkeit von der erfassten Versorgungs- oder Gleichrichter-Ausgangsspannung (U0, Ui), wobei
- der Elektromotor (14) ein mit Gleichstrom betreibbarer Elektromotor (14) ist und
- die Schalteinheit (38, 62) eine Schalteinheit (38, 62) zur Erzeugung einer Antriebsgleichspannung (Uou) für diesen mit Gleichstrom betreibbaren Elektromotor (14) ist, **dadurch gekennzeichnet, dass**
die Schalteinheit (38, 62) als Abwärtswandler ausgebildet ist oder einen Abwärtswandler umfasst.

2. Motorvorrichtung nach Anspruch 1,
**dadurch gekennzeichnet, dass**
der mit Gleichstrom betreibbare Elektromotor (14) ein Gleichstrommotor oder ein Reihenschlussmotor ist.

3. Motorvorrichtung nach einem der Ansprüche 1 oder 2, **dadurch gekennzeichnet, dass**
die Schalteinheit (38) der Gleichrichtereinheit (34) nachgeschaltet ist oder die Gleichrichtereinheit (34) die Schalteinheit (62) aufweist.

4. Motorvorrichtung nach einem der Ansprüche 1 bis 3,
**dadurch gekennzeichnet, dass**
die Steuerungsvorrichtung (16) eine Strommesseinheit (40) zur Erfassung eines zwischen der Schalteinheit (38, 62) und dem mit Gleichstrom betreibbaren Elektromotor (14) fließenden Motorstroms aufweist.

5. Motorvorrichtung nach einem der Ansprüche 1 bis 4,
**dadurch gekennzeichnet, dass**
die Steuerungsvorrichtung (16) eine galvanische Trenneinheit (42) zur galvanischen Trennung des mit Gleichstrom betreibbaren Elektromotors (14) von der Steuerungsvorrichtung (16) aufweist.

6. Motorvorrichtung nach einem der vorhergehenden Ansprüche, **dadurch gekennzeichnet, dass**
die Steuereinheit (44) eine Eingangsbaugruppe (56) aufweist, über die der Steuereinheit (44) Eingangssignale wenigstens eines externen Gerätes zuführbar sind oder zugeführt werden.

7. Motorvorrichtung nach Anspruch 6,
**dadurch gekennzeichnet, dass**
der Steuereinheit (44) über die Eingangsbaugruppe (56) Eingangssignale eines Endlagenschalters (32) zur Erfassung einer Endstellung des Schalterantriebs (10) zugeführt werden.

8. Motorvorrichtung nach einem der vorhergehenden Ansprüche, **dadurch gekennzeichnet, dass**
die Steuereinheit (44) eine Ausgangsbaugruppe (58) aufweist, über die von der Steuereinheit (44) Ausgangssignale an wenigstens ein externes Gerät abgegeben werden.

9. Verfahren zum Betrieb einer gemäß einem der vorhergehenden Ansprüche ausgebildeten Motorvorrichtung (12), wobei
- mittels der Gleichrichtereinheit (34) eine Versorgungsspannung (U0) der Motorvorrichtung (12) gleichgerichtet wird, wenn die Versorgungsspannung (U0) eine Wechselspannung ist, und ein Verpolungsschutz bereitgestellt wird, wenn die Versorgungsspannung (U0) eine Gleichspannung ist (S1),
- mittels der Spannungsmesseinheit (36) die Versorgungsspannung (U0) der Motorvorrichtung (12) oder die Ausgangsspannung der Gleichrichtereinheit (34) erfasst wird (SM)und
- mittels der Schalteinheit (38, 62) eine Antriebsspannung (Uou) für den mit Gleichstrom betreibbaren Elektromotor (14) erzeugt wird (S2), wobei die Schalteinheit (38, 62) mittels der Steuereinheit (44) in Abhängigkeit von der mittels der Spannungsmesseinheit (36) erfassten Versorgungs- oder Gleichrichter-Ausgangsspannung (U0, Ui) angesteuert wird.

10. Verfahren nach Anspruch 9,
**dadurch gekennzeichnet, dass**
eine Amplitude eines zwischen der Schalteinheit (38, 62) und dem mit Gleichstrom betreibbaren Elektromotor (14) fließenden Motorstroms erfasst wird, ein Amplitudenschwellenwert vorgegeben wird und der mit Gleichstrom betreibbare Elektromotor (14) ausgeschaltet wird, wenn die erfasste Amplitude des Motorstroms den Amplitudenschwellenwert überschreitet.

11. Verfahren nach Anspruch 9 oder 10,
**dadurch gekennzeichnet, dass**
eine Zeitdauer erfasst wird, während der ein Motorstrom zwischen der Schalteinheit (38, 62) und dem mit Gleichstrom betreibbaren Elektromotor (14) fließt, ein Zeitschwellenwert vorgegeben wird und der mit Gleichstrom betreibbare Elektromotor (14) ausgeschaltet wird, wenn die erfasste Zeitdauer den Zeitschwellenwert überschreitet.

## Claims

1. Motor apparatus (12) for a switch drive (10) of an electrical switch, having an electric motor (14) and a control apparatus (16) for controlling the electric motor (14), the control apparatus (16) having:
- a rectifier unit (34) for rectifying a supply voltage (UO) of the motor apparatus (12) if the supply voltage (UO) is an AC voltage and for polarity reversal protection if the supply voltage (UO) is a DC voltage,
- a voltage measuring unit (36) for capturing the supply voltage (UO) or a rectifier output voltage of the rectifier unit (34),
- a switching unit (38, 62) for generating a drive voltage (Uou) for the electric motor (14) from the supply voltage (UO) or from the rectifier output voltage (Ui), and
- a control unit (44) for controlling the switching unit (38, 62) on the basis of the captured supply voltage or rectifier output voltage (U0, Ui), wherein
- the electric motor (14) is an electric motor (14) which can be operated with direct current, and
- the switching unit (38, 62) is a switching unit (38, 62) for generating a DC drive voltage (Uou) for this electric motor (14) which can be operated with direct current, **characterized in that**
the switching unit (38, 62) is in the form of a buck converter or comprises a buck converter.

2. Motor apparatus according to Claim 1,
**characterized in that**
the electric motor (14) which can be operated with direct current is a DC motor or a series-wound motor.

3. Motor apparatus according to either of Claims 1 and 2, **characterized in that**
the switching unit (38) is connected downstream of the rectifier unit (34) or the rectifier unit (34) has the switching unit (62).

4. Motor apparatus according to one of Claims 1 to 3,
**characterized in that**
the control apparatus (16) has a current measuring unit (40) for capturing a motor current flowing between the switching unit (38, 62) and the electric motor (14) which can be operated with direct current.

5. Motor apparatus according to one of Claims 1 to 4,
**characterized in that**
the control apparatus (16) has a DC isolating unit (42) for the DC isolation of the electric motor (14) which can be operated with direct current from the control apparatus (16).

6. Motor apparatus according to one of the preceding claims, **characterized in that**
the control unit (44) has an input assembly (56), via which input signals from at least one external device can be supplied or are supplied to the control unit (44).

7. Motor apparatus according to Claim 6,
**characterized in that**
input signals from a limit switch (32) for capturing an end position of the switch drive (10) are supplied to the control unit (44) via the input assembly (56).

8. Motor apparatus according to one of the preceding claims, **characterized in that**
the control unit (44) has an output assembly (58), via which output signals are output by the control unit (44) to at least one external device.

9. Method for operating a motor apparatus (12) designed according to one of the preceding claims, wherein
- the rectifier unit (34) is used to rectify a supply voltage (UO) of the motor apparatus (12) if the supply voltage (UO) is an AC voltage and to provide polarity reversal protection if the supply voltage (UO) is a DC voltage (S1),
- the voltage measuring unit (36) is used to capture the supply voltage (UO) of the motor apparatus (12) or the output voltage of the rectifier unit (34) (SM), and
- the switching unit (38, 62) is used to generate a drive voltage (Uou) for the electric motor (14) which can be operated with direct current (S2), wherein the switching unit (38, 62) is controlled by means of the control unit (44) on the basis of the supply voltage or rectifier output voltage (U0, Ui) captured by means of the voltage measuring unit (36).

10. Method according to Claim 9,
**characterized in that**
an amplitude of a motor current flowing between the switching unit (38, 62) and the electric motor (14) which can be operated with direct current is captured, an amplitude threshold value is predefined and the electric motor (14) which can be operated with direct current is switched off if the captured amplitude of the motor current exceeds the amplitude threshold value.

11. Method according to Claim 9 or 10,
**characterized in that**
a period during which a motor current flows between the switching unit (38, 62) and the electric motor (14) which can be operated with direct current is captured, a time threshold value is predefined and the electric motor (14) which can be operated with direct current is switched off if the captured period exceeds the time threshold value.

## Revendications

1. Système (12) à moteur pour un entraînement (10) d'un interrupteur électrique, comprenant un moteur (14) électrique et un montage (16) de commande du moteur (14) électrique, le montage (16) de commande comportant :
- une unité (34) de redresseur pour redresser une tension (UO) d'alimentation du système (12) à moteur, si la tension (UO) d'alimentation est une tension alternative, et pour la protection de la polarité, si la tension (UO) d'alimentation est une tension continue,
- une unité (36) de mesure de la tension pour la détection de la tension (UO) d'alimentation ou d'une tension de sortie de redresseur de l'unité (34) de redresseur,
- une unité (38, 62) de coupure pour la production d'une tension (Uou) d'entraînement du moteur (14) électrique, à partir de la tension (UO) d'alimentation ou de la tension (Ui) de sortie de redresseur, et
- une unité (44) de commande pour la commande de l'unité (38, 62) de coupure en fonction de la tension (U0, Ui) détectée d'alimentation ou de sortie de redresseur, dans lequel
- le moteur (14) électrique est un moteur (14) électrique pouvant fonctionner par du courant continu, et
- l'unité (38, 62) de coupure est une unité (38, 62) de coupure de production d'un tension (Uou) continue d'entraînement pour ce moteur (14) électrique pouvant fonctionner par du courant continu, **caractérisé en ce que**
l'unité (38, 62) de coupure est constituée sous la forme d'un transformateur abaisseur de tension ou comprend un transformateur abaisseur de tension.

2. Système à moteur suivant la revendication 1,
**caractérisé en ce que**
le moteur (14) électrique pouvant fonctionner par du courant continu est un moteur à courant continu ou un moteur à excitation série.

3. Système à moteur suivant l'une des revendications 1 ou 2, **caractérisé en ce que**
l'unité (38) de coupure est montée en aval de l'unité (34) de redresseur ou l'unité (34) de redresseur comporte l'unité (62) de coupure.

4. Système à moteur suivant l'une des revendications 1 à 3,
**caractérisé en ce que**
le montage (16) de commande a une unité (40) de mesure du courant pour la détection d'un courant de moteur passant entre l'unité (38, 62) de coupure et le moteur (14) électrique pouvant fonctionner par du courant continu.

5. Système à moteur suivant l'une des revendications 1 à 4,
**caractérisé en ce que**
le montage (16) de commande a une unité (42) galvanique de séparation pour la séparation galvanique du moteur (14) électrique pouvant fonctionner par du courant continu du montage (16) de commande.

6. Système à moteur suivant l'une des revendications précédentes,
**caractérisé en ce que**
l'unité (44) de commande a un module (56) d'entrée, par lequel des signaux d'entrée d'au moins un appareil extérieur sont envoyés à l'unité (44) de commande ou peuvent l'être.

7. Système à moteur suivant la revendication 6,
**caractérisé en ce que**
des signaux d'entrée d'un interrupteur (32) de fin de course sont envoyés à l'unité (44) de commande par le module (56) d'entrée pour la détection d'une position finale de l'entraînement (10) de l'interrupteur.

8. Système à moteur suivant l'une des revendications précédentes,
**caractérisé en ce que**
l'unité (44) de commande a un module (58) de sortie, par lequel les signaux de sortie de l'unité (44) de commande sont donnés à au moins un appareil extérieur.

9. Procédé pour faire fonctionner un système (12) à moteur constitué suivant l'une des revendications précédentes, dans lequel
- on redresse une tension (UO) du système (12) à moteur au moyen de l'unité (34) de redresseur si la tension (UO) d'alimentation est une tension alternative, et on met à disposition une protection de la polarité si la tension (UO) d'alimentation est une tension continue (S1),
- au moyen de l'unité (36) de mesure de la tension, on détecte la tension (UO) d'alimentation du système (12) à moteur ou la tension de sortie de l'unité (34) de redresseur (SM), et
- au moyen de l'unité (38, 62) de coupure, on produit une tension (Uou) d'entraînement du moteur (14) électrique pouvant fonctionner par du courant continu (S2), dans lequel on commande l'unité (38, 62) de coupure au moyen de l'unité (44) de commande en fonction de la tension (U0, Ui) d'alimentation ou de sortie de redresseur détectée au moyen de l'unité (36) de mesure de la tension.

10. Procédé suivant la revendication 9,
**caractérisé en ce que**
l'on détecte une amplitude d'un courant du moteur passant entre l'unité (38, 62) de coupure et le moteur (14) électrique pouvant fonctionner par du courant continu, on prescrit une valeur de seuil d'amplitude et l'on met hors circuit le moteur (14) électrique pouvant fonctionner par du courant continu, si l'amplitude détectée du courant du moteur dépasse la valeur de seuil d'amplitude.

11. Procédé suivant la revendication 9 ou 10,
**caractérisé en ce que**
l'on détecte une durée pendant laquelle un courant du moteur passe entre l'unité (38, 62) de coupure et le moteur (14) électrique pouvant fonctionner par du courant continu, on prescrit une valeur de seuil de temps et on met le moteur (14) électrique pouvant fonctionner par du courant continu hors circuit, si la durée dépasse la valeur de seuil de temps.
